# EUROPEAN PATENT APPLICATION

(11) **EP 4 375 331 A1**
(43) Date of publication of application: **29.05.2024**
(21) Application number: 23853630.4
(22) Date of filing: 11.07.2023
(51) Int. Cl.: C08L 71/12

(54) **POLY(ARYLENE ETHER) RESIN COMPOSITION, PREPARATION METHOD THEREFOR, AND MOLDED ARTICLE MANUFACTURED THEREFROM**

(30) Priority: 01.09.2022 KR 20220110704; 06.07.2023 KR 20230087697
(71) Applicant: LG CHEM, LTD., Yeongdeungpo-gu Seoul 07336 (KR)
(72) Inventor: The designation of the inventor has not yet been filed
(74) Representative: Goddar, Heinz J.
(86) International application number: PCT/KR2023/009804
(87) International publication number: WO 2024/048976

(57) **Abstract**

The present disclosure relates to a poly(arylene ether) resin composition, a method of preparing the same and a molded article manufactured using the same, and more particularly to a poly(arylene ether) resin composition including 100 parts by weight of a base resin including 75 to 95 % by weight of a poly(arylene ether) resin (a-1) and 5 to 25 % by weight of a polystyrene resin (a-2); 12 to 17 parts by weight of two or more types of organophosphorus flame retardants (b) having different phosphorus contents; 10 to 40 parts by weight of glass fiber (c); 0.5 to 5 parts by weight of mica powder (d); and 1 to 4 parts by weight of a sulfate (e) of an alkaline earth metal with an average particle diameter of 0.05 to 3 *µ*m, a method of preparing the poly(arylene ether) resin composition and a molded article manufactured using the poly(arylene ether) resin composition. According to the present invention, a poly(arylene ether) resin composition capable of providing excellent mechanical properties such as excellent impact strength, tensile strength and flexural strength, excellent heat resistance, excellent flame retardancy and excellent flame retardation properties, a method of preparing the poly(arylene ether) resin composition and a molded article manufactured using the poly(arylene ether) resin composition can be provided.

## Description

### [Technical Field]

### [Cross-Reference to Related Applications]

This application claims priority to Korean Patent Application No. 10-2022-0110704, filed on September 01, 2022, and Korean Patent Application No. 10-2023-0087697, refiled on July 06, 2023, based on Korean Patent Application No. 10-2022-0110704, in the Korean Intellectual Property Office, the disclosure of which is incorporated herein by reference.

The present disclosure relates to a poly(arylene ether) resin composition, a method of preparing the same and a molded article manufactured using the same, and more particularly to a poly(arylene ether) resin composition having excellent mechanical properties, heat resistance and flame retardancy such as excellent impact strength, tensile strength and flexural strength and ensuring safety due to excellent flame retardation properties during thermal runaway, a method of preparing the poly(arylene ether) resin composition and a molded article manufactured using the poly(arylene ether) resin composition.

### [Background Art]

A poly(arylene ether) resin is a thermoplastic material with high glass transition temperature, high dimensional stability, low specific gravity, hydrolysis stability and good mechanical performance.

However, when a poly(arylene ether) resin is used alone, it requires a high processing temperature and thus has poor molding properties. Accordingly, it is used in the form of a mixture with rubber-reinforced polystyrene containing rubber which is an aromatic vinyl polymer. In particular, since a polyphenylene ether resin containing rubber-reinforced polystyrene has compatibility in all areas regardless of the content of each thereof, excellent mechanical properties are exhibited. Accordingly, it is widely used in various industrial fields such as products used under high heat, e.g., automobile components, electrical or electronic components, and building materials. In addition, a poly(arylene ether) resin reinforced with glass fiber is used in some applications requiring better flexural modulus and flexural strength.

However, a molded article made of the resin composition has excellent physical properties such as excellent impact strength, tensile strength, appearance, and heat resistance, but generally has a drawback of combustibility. In particular, when used as a component of an electric vehicle battery, flame retardation properties during thermal runaway, in addition to flame retardancy, are also required for safety. Thermal runaway, a major cause of electric vehicle battery fires, is a phenomenon in which heat is generated due to stress applied to battery cells for various reasons. When the internal temperature of a battery rises above a certain level due to short circuits such as overvoltage and overdischarge, flames occur. A lithium-ion battery is highly reactive with water, making it difficult to extinguish easily with water in case of fire.

To address the problem, flame retardancy and flame retardation properties are imparted by applying both a halogenated compound and an antimony compound to a poly(arylene ether) resin composition including a poly(arylene ether) resin. As a halogenated compound, polybromodiphenyl ether, tetrabromobisphenol A, a brominated epoxy compound, chlorinated polyethylene or the like is mainly used. As antimony compounds, antimony trioxide and antimony pentoxide are mainly used. The method of imparting flame retardancy by applying a halogen and an antimony compound together has the advantage of securing flame retardancy and hardly deteriorating physical properties, but it lacks flame retardation properties and is highly likely to have a fatal effect on the human body due to a hydrogen halide gas generated during processing. A halogen-free flame retardant is named a non-halogen flame retardant, and the most widely used non-halogen flame retardant is a phosphorus-based flame retardant containing phosphorus. However, in the case of a phosphorus-based flame retardant, flame retardancy is significantly decreased compared to a halogen-containing flame retardant. Accordingly, a large amount of phosphorus-based flame retardant should be added to obtain excellent flame retardancy and flame retardation properties, so that the physical properties of a resin composition deteriorate.

Flame retardancy can be imparted to a resin composition in the same way as above, but there is a problem in that the flame retardation properties that can suppress the thermal runaway of an electric vehicle battery are insufficient and the mechanical properties deteriorate.

Therefore, there is an urgent need for the development of a resin composition that has excellent mechanical properties, heat resistance and flame retardancy, and excellent flame retardation properties during thermal runaway, thereby being capable of satisfying the quality required for electronic components such as electric vehicle batteries.

### [Related Art Document]

### [Patent Document]

### Japanese Application Pub. No. hei 2-187456

### [Disclosure]

### [Technical Problem]

Therefore, the present disclosure has been made in view of the above problems, and it is one object of the present disclosure to provide a poly(arylene ether) resin composition having excellent mechanical properties such as excellent impact strength, tensile strength and flexural strength and excellent heat resistance and flame retardancy and being capable of securing safety due to excellent flame retardation properties during thermal runaway.

It is another object of the present disclosure to provide a method of preparing the poly(arylene ether) resin composition.

It is yet another object of the present disclosure to provide a molded article made of a poly(arylene ether) resin composition.

The above and other objects can be accomplished by the present disclosure described below.

### [Technical Solution]

In accordance with an aspect of the present invention, the above and other objects can be accomplished by the provision of I) a poly(arylene ether) resin composition, including: 100 parts by weight of a base resin including 75 to 95 % by weight of a poly(arylene ether) resin (a-1) and 5 to 25 % by weight of a polystyrene resin (a-2); 12 to 17 parts by weight of two or more types of organophosphorus flame retardants (b) having different phosphorus contents; 10 to 40 parts by weight of glass fiber (c); 0.5 to 5 parts by weight of mica powder (d); and 1 to 4 parts by weight of a sulfate (e) of an alkaline earth metal with an average particle diameter of 0.05 to 3 *µ*m.
II) In I), the poly(arylene ether) resin (a-1) may have preferably an intrinsic viscosity of 0.2 to 0.8 dl/g.
III) In I) or II), the polystyrene resin (a-2) may be preferably general-purpose polystyrene, high-impact polystyrene, or a mixture thereof.
IV) In I) to III), the two or more types of organophosphorus flame retardants (b) having different phosphorus contents may include preferably an organophosphorus flame retardant (b-1) containing 5 to 15 % by weight of phosphorus and an organophosphorus flame retardant (b-2) containing 20 to 35 % by weight of phosphorus.
V) In I) to IV), a weight ratio (b-1:b-2) of the organophosphorus flame retardant (b-1) to the organophosphorus flame retardant (b-2) may be preferably 6:4 to 8.5:1.5.
VI) In I) to V), the organophosphorus flame retardant (b-1) containing 5 to 15 % by weight of phosphorus may be preferably one or more selected from the group consisting of bisphenol-A-bis(diphenyl phosphate) (BPADP), tri-phenyl phosphate (TPP), and resorcinol bis diphenyl phosphate (RDP).
VII) In I) to VI), the organophosphorus flame retardant (b-2) containing 20 to 35 % by weight of phosphorus may be preferably one or more selected from the group consisting of a dialkylphosphinic acid salt represented by Formula 3 below, a diphosphinic acid salt represented by Formula 4, and a polymer of one or more thereof:

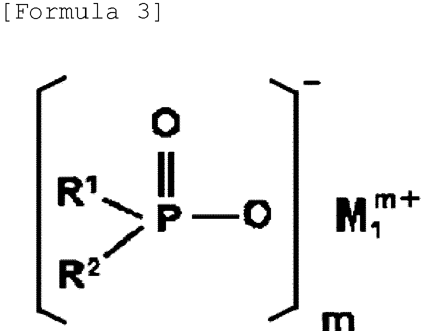

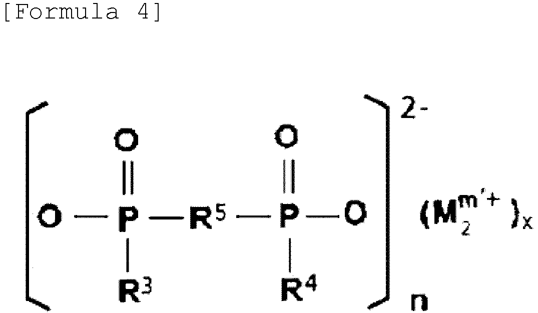

   in Formulas 3 and 4, R¹, R², R³ and R⁴ are each independently linear or branched C₁-C₁₀ alkyl, C₁-C₁₀ cycloalkyl, or H; R⁵ is linear or branched C₁-C₁₀ alkylene, C₆-C₁₀ arylene, C₇-C₂₀ alkylarylene, or C₇-C₂₀ arylalkylene; M₁^{m+} and M₂^{m'+} are each independently a nitrogen base compound in which one or more atoms selected from the group consisting of Mg, Ca, Al, Sb, Sn, Ge, Ti, Zn, Fe, Zr, Ce, Bi, Sr, Mn, Li, Na, and K are cationized, protonated, or cationized and protonated; m is an integer from 1 to 4; n is an integer from 1 to 4; and x is an integer from 1 to 4.
VIII) In I) to VII), the glass fiber (c) may have preferably an average particle diameter of 3 to 25 gm and an average length of 1 to 15 mm.
IX) In I) to VIII), the mica powder (d) may have preferably an average particle diameter of 50 to 150 gm.
X) In I) to IX), after applying a flame having a size (125 mm (500 W)) specified in ASTM D5207 in accordance with UL 94 5V test to an injection-molded specimen with a size of 100 mm * 100 mm * 1 mm made of the poly(arylene ether) resin composition, a flame endurance time taken until a hole or a drip is generated in the specimen may be preferably 500 seconds or more.
XI) In I) to X), a notched Izod impact strength, measured according to ISO 180A, of a notched specimen made of the poly(arylene ether) resin composition and having a thickness of 4 mm may be preferably 7.7 kJ/m² or more.
XII) In I) to XI), a heat deflection temperature, measured under a stress of 1.8 MPa in accordance with ISO 75-2, of a specimen made of the poly(arylene ether) resin composition and having a thickness of 4 mm may be preferably 120 °C or more.
XIII) In I) to XII), the poly(arylene ether) resin composition may include preferably one or more selected from the group consisting of a lubricant, an antioxidant, a compatibilizer and an impact modifier.

In accordance with another aspect of the present invention, there is provided XIV) a method of preparing a poly(arylene ether) resin composition, the method including: kneading and extruding 100 parts by weight of a base resin including 75 to 95 % by weight of a poly(arylene ether) resin (a-1) and 5 to 25 % by weight of a polystyrene resin (a-2), 12 to 17 parts by weight of two or more types of organophosphorus flame retardants (b) having different phosphorus contents, 10 to 40 parts by weight of glass fiber (c), 0.5 to 5 parts by weight of mica powder (d) and 1 to 4 parts by weight of a sulfate (e) of an alkaline earth metal with an average particle diameter of 0.05 to 3 gm, wherein the kneading and extruding is performed using an extruder equipped with 9 or more kneading blocks.

In accordance with yet another aspect of the present invention, there is provided XV) a molded article including the poly(arylene ether) resin composition of any one of I) to XIII).

### [Advantageous Effects]

As apparent from the above description, a high-quality poly(arylene ether) resin composition having excellent mechanical properties such as excellent impact strength, tensile strength and flexural strength, excellent heat resistance and flame retardancy and excellent flame retardation properties during thermal runaway and, accordingly, being applicable to electronic components such as electric-vehicle battery components, a method of preparing the poly(arylene ether) resin composition and a molded article manufactured using the poly(arylene ether) resin composition are provided.

In addition, the present invention provides a poly(arylene ether) resin composition having excellent mechanical properties together with excellent flame retardation properties and, accordingly, being capable of minimizing the deformation of an automobile caused by vibration or impact and the deterioration of the physical properties of the automobile due to changes in temperature and humidity while securing safety, a method of preparing the poly(arylene ether) resin composition and a molded article manufactured using the poly(arylene ether) resin composition.

### [Description of Drawings]

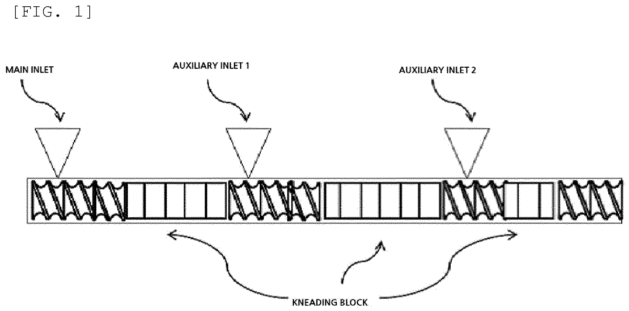

FIG. 1 illustrates a schematic diagram of an extruder equipped with 9 or more kneading blocks for preparing a poly(arylene ether) resin composition of the present invention.

### [Best Mode]

Hereinafter, a poly(arylene ether) resin composition, a method of preparing the same and a molded article manufactured using the same of the present disclosure is described in detail.

The present inventors confirmed that, when a poly(arylene ether) resin composition includes a base resin including a poly(arylene ether) resin and a polystyrene resin in predetermined contents; and two or more types of organophosphorus flame retardants having different phosphorus contents; glass fiber; mica powder; and a sulfate of an alkaline earth metal having a predetermined average particle diameter in predetermined contents, mechanical properties such as impact strength, tensile strength, and flexural strength are excellent, heat resistance and flame retardancy are excellent, and flame retardation properties during thermal runaway are greatly improved. Based on this, further research was conducted, thus completing the present invention.

The poly(arylene ether) resin composition according to the present disclosure is described in detail.

The poly(arylene ether) resin composition of the present disclosure includes 100 parts by weight of a base resin including 75 to 95 % by weight of a poly(arylene ether) resin (a-1) and 5 to 25 % by weight of a polystyrene resin (a-2); 12 to 17 parts by weight of two or more types of organophosphorus flame retardants (b) having different phosphorus contents; 10 to 40 parts by weight of glass fiber (c); 0.5 to 5 parts by weight of mica powder (d); and 1 to 4 parts by weight of a sulfate (e) of an alkaline earth metal with an average particle diameter of 0.05 to 3 *µ*m. In this case, all of mechanical properties such as impact strength, tensile strength and flexural strength, heat resistance, flame retardancy and flame retardation properties during thermal runaway are excellent.

Hereinafter, the respective components of the poly(arylene ether) resin composition of the present invention are described in detail.

### (a-1) Poly(arylene ether) resin

The poly(arylene ether) resin (a-1) may be included in an amount of, for example, 75 to 95 % by weight, preferably 75 to 90 % by weight, more preferably 77 to 87 % by weight, even more preferably 77 to 82 % by weight, based on 100 parts by weight of a total of the base resin. Within these ranges, mechanical properties, heat resistance and flame retardancy are excellent, and safety can be secured due to excellent flame retardation properties during thermal runaway.

In the present disclosure, thermal runaway refers to a condition where a change in temperature change changes an environment in a direction in which the temperature change is further accelerated. That is, a cause of a certain mechanical process is an increase in temperature, and energy released as a result of the process increases the temperature so that the process is accelerated, which is called thermal runaway.

The poly(arylene ether) resin (a-1) may be, for example, a homopolymer or copolymer including a unit of Formula 1 or 2 below:

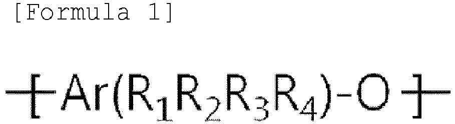

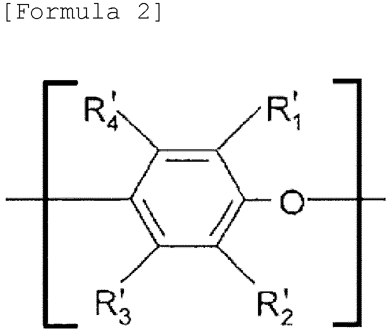

where R₁, R₂, R₃, R₄, R'₁, R'₂, R'₃, and R'₄ are substituents of an arylene group (Ar) or a phenylene group and are each independently or simultaneously hydrogen, chlorine, bromine, iodine, alkyl, allyl, phenyl, alkylbenzyl, chloroalkyl, bromoalkyl, cyanoalkyl, cyano, alkoxy, phenoxy or a nitro group. Here, Ar may be an arylene group having 7 to 20 carbon atoms, and alkoxy may be alkoxy having 1 to 4 carbon atoms.

Preferably, R₁, R₂, R₃, R₄, R'₁, R'₂, R'₃, and R'₄ are substituents of an arylene group (Ar) or a phenylene group and are each independently or simultaneously hydrogen, chlorine, bromine, iodine, methyl, ethyl, propyl, allyl, phenyl, methylbenzyl, chloromethyl, bromomethyl, cyanoethyl, cyano, methoxy, phenoxy or a nitro group, and Ar is an arylene group having 7 to 20 carbon atoms.

The homopolymer of the poly(arylene ether) resin (a-1) may be one or more selected from the group consisting of, for example, poly(2,6-dimethyl-1,4-phenylene) ether, poly(2,6-diethyl-1,4-phenylene) ether, poly(2-methyl-6-propyl-1,4-phenylene) ether, poly(2,6-dipropyl-1,4-phenylene) ether, poly(2-ethyl-6propyl-1,4-phenylene) ether, poly(2,6-dimethoxy-1,4-phenylene) ether, poly(2,6-dichloromethyl-1,4-phenylene) ether, poly(2,6-dibromomethyl,-1,4-phenylene) ether, poly(2,6-diphenyl-1,4-phenylene) ether and poly(2,5-dimethyl-1,4-phenylene) ether. In this case, mechanical properties such as impact strength, tensile strength and flexural strength are excellent, and processability is excellent, thereby improving appearance quality.

In addition, a copolymer of the poly(arylene ether) resin may be, for example, one or more selected from the group consisting of a copolymer of 2,6-dimethylphenol and 2,3,6-trimethylphenol, a copolymer of 2,6-dimethylphenol and o-cresol, and a copolymer of 2,3,6-trimethylphenol and o-cresol. In this case, mechanical properties such as impact strength and tensile strength are excellent, and processability is excellent, thereby improving appearance quality.

The poly(arylene ether) resin (a-1) may be preferably a polyphenylene ether resin.

The poly(arylene ether) resin (a-1) may have a weight average molecular weight of, for example, 10,000 to 100,000 g/mol, preferably 10,000 to 70,000 g/mol, more preferably 15,000 to 45,000 g/mol. Within these ranges, processability and physical property balance are excellent.

In the present disclosure, unless otherwise defined, the weight average molecular weight may be measured using gel permeation chromatography (GPC, Waters Breeze). As a specific example, the weight average molecular weight may be measured using chloroform as an eluate through GPC. In this case, weight average molecular weight is obtained as a relative value to a polystyrene (PS) standard sample. As a specific measurement example, the weight average molecular weight may be measured under conditions of solvent: chloroform, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

The poly(arylene ether) resin (a-1) may have an intrinsic viscosity of, for example, 0.2 to 0.8 dl/g, preferably 0.3 to 0.6 dl/g, more preferably 0.35 to 0.5 dl/g. Within these ranges, mechanical properties, such as impact, and fluidity suitable for molding may be secured, and compatibility with a polystyrene resin may be excellent.

In this description, unless noted otherwise, an intrinsic viscosity is measured at 25 °C using an Ubbelohde viscometer after dissolving a sample to be measured in a chloroform solvent to a concentration of 0.5 g/dl.

The poly(arylene ether) resin (a-1) may be used preferably in flake or powder form. In this case, mechanical properties such as impact strength and tensile strength are excellent, and processability and appearance quality are excellent.

In the present disclosure, a flake means a flake shape including a wide range of scales and granules, and as a specific example, may be a scale having a thickness of 1 to 20 *µ*m and a length of 0.05 to 1 mm. As another example, the flake may have a flake shape having a ratio (L/D) of length to depth of 1.5 to 500, preferably 2 to 100, more preferably 10 to 50.

The flake shape of the present invention may be prepared by an existing flake preparation method.

In the present disclosure, the depth and length of the flake may be measured by microscopy analysis.

The powder form may be prepared by a powder preparation method commonly known in the art.

### (a-2) Polystyrene resin

The polystyrene resin (a-2) may be included in an amount of, for example, 5 to 25 % by weight, preferably 13 to 23 % by weight, more preferably 10 to 25 % by weight, even more preferably 13 to 23 % by weight, even still more preferably 18 to 23 % by weight, based on 100 parts by weight of a base resin. Within these ranges, mechanical properties such as impact strength, tensile strength and flexural strength are excellent.

The polystyrene resin (a-2) may be, for example, a general-purpose polystyrene resin, a high-impact polystyrene, or a mixture thereof, preferably a high-impact polystyrene. In this case, processability, dimensional stability and tensile strength are excellent.

The general-purpose polystyrene resin may be, for example, a polymer prepared by polymerizing styrene alone. In this case, processability is excellent.

The high-impact polystyrene may be, for example, a rubber-reinforced polystyrene resin.

The rubber may be, for example, one or more selected from the group consisting of butadiene-based rubber, isoprene-based rubber, copolymers of butadiene and styrene, and alkyl acrylate rubber, preferably butadiene rubber. In this case, impact strength is improved.

The rubber may be included in an amount of, for example, 3 to 25 % by weight, preferably 6 to 14 % by weight, more preferably 8 to 12 % by weight, based on 100 % by weight of the high-impact polystyrene. Within these ranges, impact strength and fluidity are excellent.

The rubber may have a volume average particle diameter of, for example, 0.1 to 20 *µ*m, preferably 1.0 to 15 *µ*m. Within these ranges, impact strength and fluidity are excellent.

Preferably, the rubber-reinforced polystyrene resin may be one or more selected from the group consisting of a high-impact styrene-butadiene (HIPS) copolymer (HIPS), a styrene-butadiene-styrene (SBS) copolymer (SBS), a styrene-ethylene-butylene-styrene (SEBS) copolymer, a styrene-butadiene (SB) copolymer, a styrene-isoprene (SI) copolymer, a styrene-isoprene-styrene (SIS) copolymer, an alpha-methyl styrene-butadiene copolymer, a styrene-ethylene-propylene copolymer, a styrene-ethylene-propylene-styrene copolymer, and a styrene-(ethylene-butylene/styrene copolymer)-styrene copolymer.

For example, the rubber-reinforced polystyrene resin may be prepared by polymerizing rubber and an aromatic vinyl compound using bulk polymerization, suspension polymerization, emulsion polymerization, or a combination thereof. The polymerization may be performed in the presence of a thermal polymerization initiator or a polymerization initiator. A polymerization initiator used in the polymerization may be, for example, a peroxide-based initiator, an azo-based initiator or a mixture thereof. The peroxide-based initiator may be preferably one or more selected from the group consisting of benzoylperoxide, t-butyl hydroperoxide, acetyl peroxide, and cumene hydroperoxide, and the azo-based initiator may be preferably azobis(isobutyronitrile).

In the present disclosure, the volume average particle diameter of non-dissolved and dispersed rubber particles in particulate form may be measured using a laser scattering method after dissolving 3 g of a high-impact polystyrene resin in 100 ml of methyl ethyl ketone using a Coulter Counter LS230.

The polystyrene resin (a-2) may have a melt flow index of, for example, 2 to 20 g/10 min, preferably 3 to 15 g/10 min, as measured at 200 °C under 5 kg according to ASTM D1238. Within these ranges, processability and physical property balance are excellent.

### (b) Two or more types of organophosphorus flame retardants having different phosphorus contents

The two or more types of organophosphorus flame retardants (b) having different phosphorus contents may be included in an amount of, for example, 12 to 17 parts by weight, preferably 12.5 to 16 parts by weight, more preferably 12.7 to 15.5 parts by weight, based on 100 parts by weight of the base resin. In this case, flame retardancy is superior, and mechanical properties are excellent.

The two or more types of organophosphorus flame retardants (b) having different phosphorus contents may include, for example, an organophosphorus flame retardant (b-1) containing 5 to 15 % by weight of phosphorus and an organophosphorus flame retardant (b-2) containing 20 to 35 % by weight of phosphorus, preferably an organophosphorus flame retardant (b-1) containing 7 to 12 % by weight of phosphorus and an organophosphorus flame retardant (b-2) containing 22 to 30 % by weight of phosphorus. In this case, flame retardancy may be further improved while reducing the content of a flame retardant. In addition, flame retardation properties during thermal runaway are excellent, and impact resistance is superior.

In the present disclosure, the phosphorus content means the content (% by weight) of phosphorus converted from the molecular weight of phosphorus contained in the molecular structure of an organophosphorus flame retardant.

A weight ratio (b-1:b-2) of the organophosphorus flame retardant (b-1) to the organophosphorus flame retardant (b-2) may be, for example, 6:4 to 8.5:1.5, preferably 7:3 to 8:2, more preferably 7.5:2.5 to 8:2. Within these ranges, flame retardancy, flame retardation properties during thermal runaway and mechanical properties are further improved.

The organophosphorus flame retardant (b-1) containing 5 to 15 % by weight of phosphorus may be, for example, one or more selected from the group consisting of bisphenol-A-bis(diphenyl phosphate) (BPADP), tri-phenyl phosphate (TPP), and resorcinol bis diphenyl phosphate (RDP), preferably bisphenol-A-bis(diphenyl phosphate). In this case, high flame retardancy may be imparted even with a small amount of a flame retardant while maintaining mechanical properties.

The organophosphorus flame retardant (b-2) containing 20 to 35 % by weight of phosphorus may be, for example, one or more selected from the group consisting of a dialkylphosphinic acid salt represented by Formula 3 below, a diphosphinic acid salt represented by Formula 4 below, and a polymer of one or more thereof. In this case, high flame retardancy may be realized even with a small amount of flame retardant while maintaining mechanical properties, and flame retardation properties are excellent:

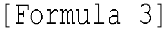

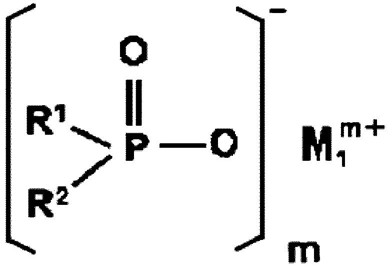

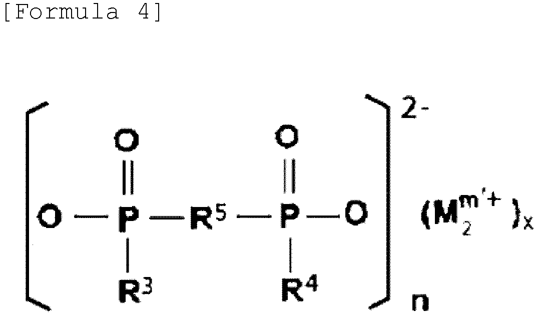

(In Formulas 3 and 4, R¹, R², R³ and R⁴ are each independently linear or branched C₁-C₁₀ alkyl, C₁-C₁₀ cycloalkyl, or H; R⁵ is linear or branched C₁-C₁₀ alkylene, C₆-C₁₀ arylene, C₇-C₂₀ alkylarylene, or C₇-C₂₀ arylalkylene; M₁^{m+} and M₂^{m'+} are each independently a nitrogen base compound in which one or more atoms selected from the group consisting of Mg, Ca, Al, Sb, Sn, Ge, Ti, Zn, Fe, Zr, Ce, Bi, Sr, Mn, Li, Na, and K are cationized, protonated, or cationized and protonated; m is an integer from 1 to 4; n is an integer from 1 to 4; and x is an integer from 1 to 4.)

Preferably, cycloalkyl in Formulas 3 and 4 may be independently cyclohexyl or cyclohexadimethyl.

Preferably, R¹, R², R³ and R⁴ may be each independently methyl, ethyl, n-propyl, isopropyl, n-butyl, tert-butyl, n-pentyl or phenyl.

Preferably, R⁵ may be methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene or phenylbutylene.

Preferably, M₁^{m+} and M₂^{m'+} may be each independently one or more selected from the group consisting of Mg, Ca, Al, Ti and Zn.

R¹ and R²; and R³ and R⁴ may bond to each other to form a ring with adjacent phosphorus atoms. The ring formed by the bonded R¹ and R²; and R³ and R⁴ together with adjacent phosphorus atoms is a heterocyclic ring having the phosphorus atoms as heteroatoms constituting the ring, and the number of atoms constituting the ring may be, for example, 4 to 20, preferably 5 to 16. The heterocycle having phosphorus atoms may be a bicyclo ring or may have a substituent.

Preferably, the dialkylphosphinic acid salt represented by Formula 3 may be one or more selected from the group consisting of calcium dimethylphosphinate, magnesium dimethylphosphinate, aluminum dimethylphosphinate, zinc dimethylphosphinate, calcium ethyl methylphosphinate, magnesium ethyl methylphosphinate, aluminum ethyl methylphosphinate, zinc ethyl methylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methyl phenylphosphinate, magnesium methyl phenylphosphinate, aluminum methyl phenylphosphinate, zinc methylphenyl phosphinate, calcium diphenylphosphinate, magnesium diphenylphosphinate, aluminum diphenylphosphinate, and zinc diphenylphosphinate.

Preferably, the diphosphinic acid salt represented by Formula 4 may be one or more selected from the group consisting of methylenebis(methylphosphinic acid) calcium, methylenebis(methylphosphinic acid) magnesium, methylenebis(methylphosphinic acid) aluminum, methylenebis(methylphosphinic acid) zinc, 1,4-phenylenebis(methylphosphinic acid) calcium, 1,4-phenylenebis(methylphosphinic acid) magnesium, 1,4-phenylenebis(methylphosphinic acid)aluminum, and 1,4-phenylenebis(methylphosphinic acid)zinc.

More preferably, the organophosphorus flame retardant (b-2) may be one or more selected from the group consisting of calcium dimethylphosphinate, dimethylphosphinic acidaluminum, zinc dimethylphosphinate, calcium ethyl methylphosphinate, aluminum ethyl methylphosphinate, zinc ethyl methylphosphinate, calcium diethylphosphinate, aluminum diethylphosphinate, and zinc diethylhosphinate. Even more preferably, the organophosphorus flame retardant (b-2) may be diethyl phosphinic acid aluminum salt. In this case, high flame retardancy may be realized with a small amount of flame retardant while maintaining mechanical properties, and flame retardation properties are excellent.

The organophosphorus flame retardant (b-2) may have an average particle diameter of, for example, 0.1 to 100 *µ*m, preferably 0.5 to 50 *µ*m, more preferably 1 to 40 *µ*m. Within these ranges, flame retardancy and mechanical properties are excellent.

In the present disclosure, the average particle diameter of an organophosphorus flame retardant refers to a number average particle diameter obtained from a particle diameter and particle number, measured with a laser diffraction-type particle size distribution analyzer, using a dispersion of an organophosphorus flame retardant dispersed in a medium such as water as a measurement sample.

The organophosphorus flame retardant (b-1) containing 5 to 15 % by weight of phosphorus may be preferably bisphenol A bis(diphenylphosphate), and the organophosphorus flame retardant (b-2) containing 20 to 35 % by weight of phosphorus may be preferably aluminum diethyl phosphinate. In this case, there is a synergistic effect in which excellent flame retardancy is expressed even with a small amount of flame retardant.

### (c) Glass fiber

The glass fiber (c) may be included in an amount of, for example, 10 to 40 parts by weight, preferably 15 to 35 parts by weight, more preferably 20 to 30 parts by weight, based on 100 parts by weight of the base resin. Within these ranges, mechanical properties are superior, heat resistance, flame retardancy and flame retardation properties during thermal runaway are excellent, and the appearance characteristics of a final product are superior.

The glass fiber (c) may have an average particle diameter of, for example, 3 to 25 *µ*m, preferably 5 to 20 *µ*m, more preferably 7 to 15 *µ*m. Within these ranges, the mechanical strength for a resin is improved, and the appearance characteristics of a final product are superior.

The glass fiber (c) may have an average length of, for example, 1 to 15 mm, preferably 2 to 10 mm, more preferably 3 to 6 mm. Within these ranges, the mechanical strength for a resin is improved, and the appearance characteristics of a final product are superior.

The glass fiber (c) may be, for example, chopped glass fiber. In this case, compatibility is excellent.

In the present disclosure, the chopped glass fiber is not particularly limited so long as it is chopped fiber glass commonly used in the art to which the present invention belongs.

A ratio, i.e., an aspect ratio (L/D), of an average length (L) to an average diameter (D) of the glass fiber (c) may be, for example, 200 to 550, preferably 220 to 450, more preferably 250 to 350, even more preferably 270 to 320. Within these ranges, compatibility with a resin is superior so that surfacer appearance is excellent.

In the present disclosure, to obtain the average particle diameter, average length and aspect ratio of glass fiber, 30 samples are measured through microscopic analysis and an average value thereof is calculated.

The glass fiber (c) may be surface-treated with, for example, a silane-based compound or a urethane-based compound, preferably may be surface-treated with one or more surface treatment agents selected from the group consisting of an amino silane-based compound, an epoxy silane-based compound, and a urethane-based compound, more preferably may be surface-treated with an amino silane-based compound. In this case, dispersibility and surface wettability are improved by forming a chemical bond with a poly(arylene ether) resin, and as a result, mechanical properties including tensile strength of the resin composition are improved.

The surface treatment agent may be included in an amount of, for example, 0.1 to 10 % by weight, preferably 0.1 to 5 % by weight, more preferably 0.1 to 3 % by weight, even more preferably 0.1 to 0.8 % by weight, even still more preferably 0.2 to 0.5 % by weight, based on 100 % by weight of a total of the surface-treated glass fiber (glass fiber + surface treatment agent). Within these ranges, mechanical properties, physical property balance and the appearance of a final product are excellent.

The amino silane-based compound is not particularly limited so long as it is amino silane generally used as a coating agent for glass fibers and may be, for example, one or more selected from the group consisting of gamma-glycidoxypropyl triethoxy silane, gamma-glycidoxypropyl trimethoxy silane, gamma-glycidoxypropyl methyldiethoxy silane, 3-mercaptopropyl trimethoxy silane, vinyltrimethoxy silane, vinyltriethoxy silane, gamma-methacryloxypropyl trimethoxy silane, gamma-methacryloxy propyl triethoxy silane, gamma-aminopropyl trimethoxy silane, gamma-aminopropyl triethoxy silane, 3-isocyanato propyltriethoxy silane, gamma-acetoacetatepropyl trimethoxysilane, acetoacetatepropyl triethoxy silane, gamma-cyanoacetyl trimethoxy silane, gamma-cyanoacetyl triethoxy silane, and acetoxyaceto trimethoxy silane. In this case, mechanical properties and heat resistance are superior, and the surface characteristics of an injection-molded product are excellent.

The epoxy silane-based compound is not particularly limited so long as it is an epoxy silane generally used as a coating agent for glass fibers and may be, for example, one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties and heat resistance are superior, and the surface characteristics of an injection-molded product are excellent.

The glass fiber (c) may be appropriately selected and used within a range commonly used in the art so long as it is within the scope of the definition of the present invention, and the cross-sectional shape thereof is not particularly limited to a cylindrical shape or an elliptical shape.

### (d) Mica powder

The mica powder (d) may be included in an amount of, for example, 0.5 to 5 parts by weight, preferably 0.7 to 4 parts by weight, more preferably 1 to 3.5 parts by weight, even more preferably 1 to 3 parts by weight, based on 100 parts by weight of the base resin. Within these ranges, mechanical properties, heat resistance, flame retardancy and flame retardation properties during thermal runaway are excellent.

In the present disclosure, mica powder may be defined as one having an average particle diameter of 500 um or less obtained by pulverizing mica one or more times.

The mica powder (d) may have an average particle diameter of, for example, 50 to 150 *µ*m, preferably 70 to 130 *µ*m, more preferably 80 to 110 *µ*m. Within these ranges, compatibility with a resin is excellent so that all of mechanical properties, heat resistance, flame retardancy and flame retardation properties during thermal runaway may be improved and the appearance quality of a molded article is excellent.

The mica powder (d) may have an aspect ratio of, for example, 40 to 60, preferably 45 to 55. Within these ranges, the appearance quality of a molded article is excellent.

In the present disclosure, the aspect ratio of mica powder refers to a length ratio of a long axis to a short axis in a two-dimensional model.

In the present disclosure, to obtain the average particle diameter, average length, and aspect ratio of mica powder, 30 samples are measured through microscopic analysis and an average value thereof is calculated.

### (e) Sulfate of alkaline earth metal having average particle diameter of 0.05 to 3 µm

The sulfate (e) of the alkaline earth metal having an average particle diameter of 0.05 to 3 *µ*m may be included in an amount of, for example, 1 to 4 parts by weight, preferably 1.2 to 3.8 parts by weight, more preferably 1.4 to 3.6 parts by weight, based on 100 parts by weight of the base resin. Within these ranges, flame retardation properties during thermal runaway are improved, and impact resistance is excellent.

The sulfate (e) of the alkaline earth metal may have an average particle diameter of, for example, 0.05 to 3 *µ*m, preferably 0.1 to 2.5 *µ*m, more preferably 0.5 to 2 *µ*m, even more preferably 0.7 to 1.5 *µ*m. Within these ranges, compatibility is superior so that mechanical properties, heat resistance, flame retardancy and flame retardation properties during thermal runaway are improved.

The alkaline earth metal of the sulfate (e) may be, for example, one or more selected from the group consisting of elements included in Group II of the periodic table, preferably one or more selected from the group consisting of calcium, barium, strontium, and magnesium, more preferably calcium, barium or a mixture thereof, even more preferably barium. In this case, mechanical properties are improved.

As a preferred example, the sulfate (e) of the alkaline earth metal may be barium sulfate. In this case, all mechanical properties are improved.

Preferably, the sulfate (e) of the alkaline earth metal may be included in a larger amount than the mica powder (d). In this case, mechanical properties such as tensile strength, flexural strength and impact strength and heat resistance are superior.

### Poly(arylene ether) resin composition

Flame having a size (125 mm (500 W)) specified in ASTM D5207 in accordance with the UL 94 5V test is applied to an injection-molded specimen with preferably a size of 100 mm * 100 mm * 1 mm made of the poly(arylene ether) resin composition, and a flame endurance time taken until a hole or a drip is generated in the specimen may be 500 seconds or more, more preferably 550 seconds or more, even more preferably 600 seconds or more. Within these ranges, physical property balance is superior, and flame retardation properties during thermal runaway of electronic components such as an electric-vehicle battery component are excellent, so that safety may be secured.

A notched Izod impact strength measured using a notched specimen made of the poly(arylene ether) resin composition and having a thickness of 4 mm at room temperature according to ISO 180A may be 7.7 kJ/m² or more, more preferably 8.5 kJ/m² or more, even more preferably 9 kJ/m² or more, even still more preferably 9 to 13 kJ/m². Within these ranges, physical property balance is superior and mechanical strength is excellent so that, when applied to electronic components, changes caused by external environments such as an automobile vibration may be minimized.

In the present disclosure, the notched Izod impact strength was measured using a notched specimen with a thickness of 4 mm by means of IT manufactured by Toyoseiki in accordance with ISO 180A.

In the present disclosure, room temperature can be a point within a range of 20 ± 5 °C.

A tensile strength of the poly(arylene ether) resin composition measured under conditions such as a specimen thickness of 4 mm and a measurement speed of 5 mm/min in accordance with preferably ISO 527 may be 67 MPa or more, more preferably 73 MPa or more, even more preferably 80 MPa or more, even still more preferably 90 MPa or more, particularly preferably 90 to 120 MPa. Within these ranges, physical property balance is superior and mechanical strength is excellent so that, when applied to electronic components, deformation caused by vibration or impact of an automobile and degradation of physical properties due to temperature and humidity changes may be minimized.

In the present disclosure, tensile strength is measured using U.T.M (manufacturer: Instron, model name: 4466) at a cross-head speed of 5 mm/min in accordance with ISO527.

A flexural strength of the poly(arylene ether) resin composition measured under conditions such as a specimen thickness of 4 mm and a measurement speed of 2 mm/min in accordance with ISO 527 may be preferably 110 MPa or more, more preferably 115 MPa or more, even more preferably 125 MPa or more, even still more preferably 130 MPa or more, particularly preferably 130 to 170 MPa. Within these ranges, physical property balance is superior and mechanical strength is excellent so that, when applied to electronic components, changes caused by external environments such as an automobile vibration may be minimized.

A heat deflection temperature, measured under a stress of 1.8 MPa stress in accordance with ISO 75-2, of a specimen made of the poly(arylene ether) resin composition and having a thickness of 4 mm may be preferably 120 °C or more, more preferably 125 °C or more, even more preferably 130 °C or more, even still more preferably 135 °C or more, particularly preferably 135 to 150 °C. Within these ranges, physical property balance and heat resistance are superior.

A flame retardancy, measured in accordance with the UL 94 standard (vertical burning test), of an injection-molded specimen with a size of, for example, 127 mm × 12.7 mm × 1.5 mm made of the poly(arylene ether) resin composition may be V-0 grade or more. In this case, physical property balance is superior, and heat resistance and flame retardation properties during thermal runaway are excellent.

The poly(arylene ether) resin composition may include, for example, at least one additive selected from the group consisting of a lubricant, an antioxidant, a compatibilizer and an impact modifier.

A total amount of the additive may be, for example, 5 to 10 parts by weight, preferably 6 to 9.5 parts by weight, more preferably 7 to 9 parts by weight, based on 100 parts by weight of the base resin. Within these ranges, mechanical properties, heat resistance and flame retardancy are superior, and flame retardation properties during thermal runaway are excellent.

In addition to the additive, the poly(arylene ether) resin composition may further include each of one or more selected from the group consisting of a flame retardant aid, a plasticizer, a heat stabilizer, an anti-drip agent, a light stabilizer, a pigment, a dye, an inorganic additive (excluding glass fiber), and carbon fiber in an amount of 0.001 to 5 parts by weight, preferably 0.01 to 3 parts by weight, more preferably 0.05 to 2 parts by weight, based on 100 parts by weight of the base resin. Within these ranges, necessary physical properties may be well implemented without deteriorating the inherent physical properties of the poly(arylene ether) resin composition of the present disclosure.

### Method of preparing poly(arylene ether) resin composition

The method of preparing the poly(arylene ether) resin composition of the present disclosure includes a step of kneading and extruding 100 parts by weight of a base resin including 75 to 95 % by weight of a poly(arylene ether) resin (a-1) and 5 to 25 % by weight of a polystyrene resin (a-2), 12 to 17 parts by weight of two or more types of organophosphorus flame retardants (b) having different phosphorus contents, 10 to 40 parts by weight of glass fiber (c), 0.5 to 5 parts by weight of mica powder (d) and 1 to 4 parts by weight of a sulfate (e) of an alkaline earth metal with an average particle diameter of 0.05 to 3 *µ*m, wherein the kneading and extruding is performed using an extruder with 9 or more kneading blocks. In this case, all of mechanical properties such as impact strength, tensile strength and flexural strength, heat resistance, flame retardancy and flame retardation properties during thermal runaway are excellent.

The kneading and extruding may be performed within a barrel temperature range of, for example, 200 to 350 °C, preferably 220 to 330 °C, more preferably 240 to 320 °C. In this case, there is an advantage in that sufficient melt kneading is possible while a throughput per unit time is high, and problems such as thermal decomposition of resin components are not caused.

The kneading and extruding may be performed under a condition of a screw rotation rate of, for example, 100 to 500 rpm, preferably 150 to 400 rpm, more preferably 200 to 350 rpm. Within these ranges, a throughput per unit time is high, and process efficiency is excellent.

A poly(arylene ether) resin composition obtained through the kneading and extruding may preferably be provided in a pellet form.

### Molded article

A molded article of the present disclosure is characterized by including the poly(arylene ether) resin composition of the present disclosure. In this case, all of mechanical properties such as impact strength and tensile strength, heat resistance, electrical insulation and flame retardancy are excellent.

The molded article may be formed through, for example, injection molding or extrusion molding.

The molded article may be used as, for example, an electronic component or a battery component.

The battery component may be, for example, a plastic upper cover of an electric-vehicle battery, a module housing, or a busbar.

A method of manufacturing the molded article of the present disclosure includes a step of kneading and extruding preferably 100 parts by weight of a base resin including 75 to 95 % by weight of a poly(arylene ether) resin (a-1) and 5 to 25 % by weight of a polystyrene resin (a-2), 12 to 17 parts by weight of two or more types of organophosphorus flame retardants (b) having different phosphorus contents, 10 to 40 parts by weight of glass fiber (c), 0.5 to 5 parts by weight of mica powder (d) and 1 to 4 parts by weight of a sulfate (e) of an alkaline earth metal with an average particle diameter of 0.05 to 3 µm to manufacture a poly(arylene ether) resin composition pellet, and a step of injection-molding the manufactured pellet to manufacture a molded article, wherein the kneading and extruding is performed using an extruder with 9 or more kneading blocks. In this case, all of mechanical properties such as impact strength, tensile strength and flexural strength, heat resistance, flame retardancy and flame retardation properties during thermal runaway are excellent.

The injection-molding is not particularly limited so long as it is performed according to a method and condition commonly used in the technical field to which the present invention belongs and may be appropriately selected and applied as needed.

In describing the poly(arylene ether) resin composition, the molded article, the method of preparing the conductive resin composition, and the method of manufacturing the molded article of the present disclosure, other conditions (for example, the configuration and specifications of an extruder and an injection machine, extrusion and injection-molding conditions, additives, and the like) may be appropriately selected and implemented as needed, unless specified otherwise, when the conditions are within the range commonly practiced in the art, without particular limitation.

Hereinafter, the present invention is described with reference to the accompanying drawing.

The accompanying FIG. 1 illustrates a schematic diagram of an extruder equipped with 9 or more kneading blocks for preparing the poly(arylene ether) resin composition of the present invention.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

The extruder may include one or more raw material feeders, and two or more raw material feeders may be selectively included as needed. For example, a main inlet and selectively an auxiliary inlet may be included, and, as needed, two or more auxiliary inlets may be included.

As a specific example, a base resin, two or more types of organophosphorus flame retardants having different phosphorus contents, glass fiber, mica powder, and a sulfate of an alkaline earth metal may be fed batchwise into the main inlet. As another example, all the components, except for two or more types of organophosphorus flame retardants having different phosphorus contents, may be fed into the main inlet, and the flame retardants may be fed into the auxiliary inlet.

As still another example, all the components, except for two or more types of organophosphorus flame retardants having different phosphorus contents, may be fed into the main inlet, two or more types of organophosphorus flame retardants having different phosphorus contents may be fed into an auxiliary inlet 1, and additives such as a lubricant, an antioxidant, a compatibilizer and an impact modifier may be fed into an auxiliary inlet 2.

As still another example, a base resin may be fed into the main inlet, and some of two or more types of organophosphorus flame retardants having different phosphorus contents, glass fiber, mica powder and a sulfate of an alkaline earth metal may be fed into the auxiliary inlet 1, followed by feeding the remainder into the auxiliary inlet 2.

As still another example, a base resin and a sulfate of an alkaline earth metal may be fed into the main inlet, two or more types of organophosphorus flame retardants having different phosphorus contents and mica powder may be fed into the auxiliary inlet 1, and glass fiber may be fed into the auxiliary inlet 2.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

A method of preparing the poly(arylene ether) resin composition according to the present invention may include a step of kneading and extruding using an extruder equipped with for example, 9 or more kneading blocks, preferably 10 or more kneading blocks, more preferably 12 or more kneading blocks, 9 to 18 kneading blocks as a preferred example, 10 to 18 kneading blocks as a more preferred example, 12 to 16 kneading blocks as an even more preferred example. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of glass fiber and mica powder, the compatibility of a composition and the like may be further improved, so that a higher-quality poly(arylene ether) resin composition may be provided.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown). With this configuration, local heat generation during melt-kneading may be controlled to prevent thermal deformation of raw materials. In addition, excessive cutting of glass components may be prevented, so that mechanical properties, flame retardancy and flame retardation properties during thermal runaway are not decreased.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

Materials used in the following examples and comparative examples are as follows:
* (a-1) Poly(arylene ether) resin: Poly(2,6-dimethyl-1,4-phenylene) ether (PPE; LXR040 manufactured by Bluestar)
* (a-2) Polystyrene resin: HIPS (High Impact Polystyrene) resin (HI450PG manufactured by KUMHO PETROCHEMICAL)
* (b) Two or more types of organophosphorus flame retardants having different phosphorus contents: (b-1) bisphenol A bis(diphenylphosphate) (BPADP manufactured by FCA) containing 9 % by weight of phosphorus, and (b-2) aluminum diethyl phosphinate (OP1230 manufactured by Clariant) containing 25 % by weight of phosphorus
* (c) Glass fiber: Chopped glass fiber (910A-13P manufactured by Owens Corning) having an average particle diameter of 10 to 13 µm and an average length of 3 to 4 mm and surface-treated with amino silane
* (d) Mica powder: Mica powder (200D manufactured by Kurary) having an average particle diameter of 90 µm and an aspect ratio of 50
* (e-1) Sulfate of alkaline earth metal having an average particle diameter of 0.05 to 3 µm: Barium sulfate (HD80 manufactured by Solvay) having an average particle diameter of 1 µm
* (e-2) Sulfate of alkaline earth metal: Barium sulfate (Blanc FIX G manufactured by Solvay) having an average particle diameter of 4 µm
* (f) Additives: Mixture of a lubricant (pentaerythritol fatty acid ester), an antioxidant (tris(2,4-di-tert-butyl-phenyl) phosphite and pentaeryl thritol tetrakis(3-(3,5-di-tert-butyl-4-hydroxyphenyl)propionate)), a compatibilizer (fumari acid PPO), and an impact modifier (maleated, Styrene-ethylenebutylene Block copolymer rubber)

### Examples 1 to 15 and Comparative Examples 1 to 14

a poly(arylene ether) resin (a-1), a polystyrene resin (a-2), an organophosphorus flame retardant (b-1) containing 9 % by weight of phosphorus, an organophosphorus flame retardant (b-2) containing 25 % by weight of phosphorus, glass fiber (c), mica powder (d), a sulfate of an alkaline earth metal (e) and an additive (f) were melt-kneaded and extruded according to the contents shown Tables 1 to 4 below using a twin-screw extruder (T40 manufactured by SM), equipped with 10 mixing blocks, set to 250 to 310 °C and a rotation rate of 300 rpm, thereby manufacturing pellets. The pellets were manufactured into specimens for evaluation using an injection machine (80 tons manufactured by ENGEL). Each of the manufactured specimens was allowed to stand for 48 hours or more at room temperature, and then the properties thereof were measured. The results are summarized in Tables 1 to 4 below.

Here, the twin-screw extruder was provided with a total of 2 or more inlets, a base resin and a sulfate of an alkaline earth metal were fed into a main inlet thereof, two or more types of organophosphorus flame retardants having different phosphorus contents and mica powder were fed into an auxiliary inlet 1, and glass fiber was fed into an auxiliary inlet 2.

### [Test Example]

The characteristics of the specimen manufactured in each of Examples 1 to 15 and Comparative Examples 1 to 14 were measured according to the following methods. The results are summarized in Tables 1 to 4 below.

### Measurement methods

* Tensile strength (MPa): A sample having a thickness of 4 mm was pulled at a cross-head speed of 5 mm/min using U.T.M (manufacturer: Instron, model name: 4466) according to ISO 527, and then a cutting point of the specimen was measured.
* Flexural strength (MPa): The flexural strength of a specimen having a thickness of 4 mm was measured at a cross-head speed of 2 mm/min using U.T.M (manufacturer: Instron, model name: 4466) according to ISO 527.
* Impact strength (kJ/m²): Izod impact strength was measured under standard conditions of constant temperature and humidity using IT equipment manufactured by Toyoseiki according to ISO 180A. As a specimen, a notched specimen having a thickness of 4 mm was used.
* Heat deflection temperature (°C): The heat deflection temperature of a specimen having a thickness of 4 mm was measured under 45 MPa stress in accordance with ISO 75-2.
* Flame retardancy: The flame retardancy of an injection-molded specimen having a size of 127 mm x 12.7 mm x 1.5 mm was measured according to the UL 94 standard (vertical burning test).
* Flame endurance time (sec): Flame having a size (125 mm (500 W)) specified in ASTM D5207 in accordance with the UL 94 5V test was applied to an injection-molded specimen with a size of 100 mm * 100 mm * 1 mm, and a flame application time taken until a hole or a drip was generated in the specimen was measured.
* Appearance evaluation: The appearance of a molded article injection-molded under conditions such as an injection-molding temperature of 290 to 300 °C, an injection-molding speed of 50 mm/sec, a holding pressure of 60 bar, a holding pressure application time of 5 sec and a cooling time of 20 sec was visually evaluated. When completely molded without gas marks and unmolded parts, it was evaluated as "excellent," and when the appearance quality was deteriorated due to unmolded parts, gas marks, etc., it was evaluated as "poor."

**[Table 1]**

| Classifica tion | Examples | | | | | | |
|---|---|---|---|---|---|---|---|
| | 1 | 2 | 3 | 4 | 5 | 6 | 7 |
| (a-1) PPE (% by weight) | 80 | 80 | 80 | 80 | 80 | 80 | 80 |
| (a-2) HIPS (% by weight) | 20 | 20 | 20 | 20 | 20 | 20 | 20 |
| (b-1) Flame retardant containing 9 % by weight of phosphorus (parts by weight) | 10 | 10 | 10 | 10 | 10 | 10 | 10 |
| (b-2) Flame retardant containing 25 % by weight of phosphorus (parts by weight) | 3.13 | 3.13 | 3.13 | 3.13 | 3.13 | 3.13 | 3.13 |
| (c) Glass fiber (parts by weight) | 12.5 | 25 | 37.5 | 25 | 25 | 25 | 25 |
| (d) Mica powder (parts by weight) | 1.25 | 1.25 | 1.25 | 1.7 | 2.7 | 1.25 | 1.25 |
| (e) Barium sulfate (parts by weight) | 2.5 | 2.5 | 2.5 | 2.5 | 2.5 | 1.5 | 3.5 |
| (f) Additive (parts by weight) | 8.13 | 8.13 | 8.13 | 8.13 | 8.13 | 8.13 | 8.13 |

| Properties | | | | | | | |
|---|---|---|---|---|---|---|---|
| Tensile | 75 | 95 | 115 | 93 | 90 | 95 | 91 |
| strength (MPa) | | | | | | | |
| Flexural strength (MPa) | 120 | 136 | 150 | 133 | 132 | 134 | 133 |
| Impact strength (kJ/m²) | 8.5 | 9.2 | 9.8 | 8.9 | 8.5 | 8.8 | 8.9 |
| Heat deflection temperatur e (°C) | 120 | 135 | 141 | 136 | 136 | 133 | 134 |
| Flame retardancy | V-0 | V-0 | V-0 | V-0 | V-0 | V-0 | V-0 |
| Flame endurance time (sec) | 600 second s or more | 600 second s or more | 600 second s or more | 600 second s or more | 600 second s or more | 600 second s or more | 600 second s or more |
| Appearance evaluation | Excell ent | Excell ent | Excell ent | Excell ent | Excell ent | Excell ent | Excell ent |

**[Table 2]**

| Classifica tion | Examples | | | | | | | |
|---|---|---|---|---|---|---|---|---|
| | 8 | 9 | 10 | 11 | 12 | 13 | 14 | 15 |
| (a-1) PPE (% by weight) | 80 | 85 | 80 | 80 | 75 | 77 | 82 | 80 |
| (a-2) HIPS (% by weight) | 20 | 15 | 20 | 20 | 25 | 28 | 18 | 20 |
| (b-1) Flame retardant containing 9 % by weight of phosphorus (parts by weight) | 10 | 10 | 11 | 9 | 10 | 10 | 10 | 3.13 |
| (b-2) Flame retardant containing 25 % by weight of phosphorus (parts by weight) | 3.13 | 3.13 | 4 | 5 | 3.13 | 3.13 | 3.13 | 10 |
| (c) Glass fiber (parts by | 25 | 25 | 25 | 25 | 25 | 25 | 25 | 12.5 |
| weight) | | | | | | | | |
| (d) Mica powder (parts by weight) | 4 | 1.25 | 1.25 | 1.25 | 1.25 | 1.25 | 1.25 | 1.25 |
| (e) Barium sulfate (parts by weight) | 2.5 | 2.5 | 2.5 | 2.5 | 2.5 | 2.5 | 2.5 | 2.5 |
| (f) Additive (parts by weight) | 8.13 | 8.13 | 8.13 | 8.13 | 8.13 | 8.13 | 8.13 | 8.13 |

| Properties | | | | | | | | |
|---|---|---|---|---|---|---|---|---|
| Tensile strength (MPa) | 79 | 85 | 92 | 88 | 87 | 87 | 90 | 68 |
| Flexural strength (MPa) | 127 | 141 | 133 | 135 | 135 | 136 | 138 | 112 |
| Impact strength (kJ/m²) | 8.2 | 7.8 | 8.8 | 8.3 | 9.0 | 8.9 | 8.6 | 7.7 |
| Heat deflection temperatur e (°C) | 133 | 133 | 135 | 138 | 135 | 135 | 137 | 125 |
| Flame retardancy | V-0 | V-0 | V-0 | V-0 | V-0 | V-0 | V-0 | V-0 |
| Flame endurance time (sec) | 600 second s or more | 560 second s | 600 second s or more | 600 second s or more | 588 second s | 600 second s or more | 600 second s or more | 600 second s or more |
| Appearance evaluation | Excell ent | Excell ent | Excell ent | Excell ent | Excell ent | Excell ent | Excell ent | Excell ent |

**[Table 3]**

| Classificat ion | Comparative Examples | | | | | | |
|---|---|---|---|---|---|---|---|
| | 1 | 2 | 3 | 4 | 5 | 6 | 7 |
| (a-1) PPE (% by weight) | 80 | 80 | 80 | 80 | 80 | 70 | 80 |
| (a-2) HIPS (% by weight) | 20 | 20 | 20 | 20 | 20 | 30 | 20 |
| (b-1) Flame retardant containing | - | - | 10 | 10 | 10 | 10 | 18.75 |
| 9 % by weight of phosphorus (parts by weight) | | | | | | | |
| (b-2) Flame retardant containing 25 % by weight of phosphorus (parts by weight) | 3.13 | 7.5 | 3.13 | 3.13 | 1.56 | 3.13 | 3.13 |
| (c) glass fiber (parts by weight) | 12.5 | 12.5 | 12.5 | 12.5 | 12.5 | 12.5 | 12.5 |
| (d) Mica powder (parts by weight) | 1.25 | 1.25 | - | - | 1.25 | 1.25 | 1.25 |
| (e) Barium sulfate (parts by weight) | 2.5 | 2.5 | 2.5 | - | 2.5 | 2.5 | 2.5 |
| (f) Additive (parts by weight) | 8.13 | 8.13 | 8.13 | 8.13 | 8.13 | 8.13 | 8.13 |

| Properties | | | | | | | |
|---|---|---|---|---|---|---|---|
| Tensile strength (MPa) | 73 | 62 | 76 | 82 | 78 | 74 | 72 |
| Flexural strength (MPa) | 124 | 103 | 127 | 127 | 125 | 120 | 115 |
| Impact strength (kJ/m²) | 7.8 | 5.4 | 7.8 | 8.6 | 7.6 | 8.6 | 8.1 |
| Heat deflection temperature (°C) | 160 | 164 | 131 | 122 | 131 | 119 | 110 |
| Flame retardancy | V-1 | V-0 | V-1 | V-1 | V-1 | V-0 | V-0 |
| Flame endurance time (sec) | 430 | 600 seconds or more | 70 | 42 | 53 | 321 | 59 |
| Appearance evaluation | Excelle nt | Excelle nt | Excelle nt | Excelle nt | Excelle nt | Excelle nt | Excelle nt |

**[Table 4]**

| Classificati on | Comparative Examples | | | | | | |
|---|---|---|---|---|---|---|---|
| | 8 | 9 | 10 | 11 | 12 | 13 | 14 |
| (a-1) PPE (% by weight) | 80 | 80 | 80 | 80 | 80 | 80 | 80 |
| (a-2) HIPS (% by weight) | 20 | 20 | 20 | 20 | 20 | 20 | 20 |
| (b-1) Flame retardant containing 9 % by weight of phosphorus (parts by weight) | 10 | 10 | 10 | 10 | 10 | 10 | 10 |
| (b-2) Flame retardant containing 25 % by weight of phosphorus (parts by weight) | 3.13 | 3.13 | 3.13 | 3.13 | 3.13 | 3.13 | 3.13 |
| (c) Glass fiber (parts by weight) | 25 | 25 | 25 | 25 | 25 | 4 | 43 |
| (d) Mica powder (parts by weight) | 0.1 | 6 | 1.25 | 1.25 | 1.25 | 1.25 | 1.25 |
| (e-1) Barium sulfate (parts by weight) | 2.5 | 2.5 | 0.5 | 4.5 | - | 2.5 | 2.5 |
| (e-2) Barium sulfate (parts by weight) | | | | | 2.5 | | |
| (f) Additive (parts by weight) | 8.13 | 8.13 | 8.13 | 8.13 | 8.13 | 8.13 | 8.13 |

| Properties | | | | | | | |
|---|---|---|---|---|---|---|---|
| Tensile strength (MPa) | 97 | 72 | 97 | 88 | 85 | 60 | 120 |
| Flexural strength | 140 | 121 | 138 | 130 | 130 | 95 | 163 |
| (MPa) | | | | | | | |
| Impact strength (kJ/m²) | 9.3 | 7.5 | 9.2 | 8.8 | 8.3 | 6.2 | 10.4 |
| Heat deflection temperature (°C) | 138 | 130 | 136 | 127 | 125 | 100 | 138 |
| Flame retardancy | V-1 | V-0 | V-0 | V-0 | V-0 | V-1 | V-0 |
| Flame endurance time (sec) | 85 | 600 seconds or more | 52 | 215 | 188 | 355 | 600 second s or more |
| Appearance evaluation | Excelle nt | Excelle nt | Excelle nt | Excelle nt | Excelle nt | Excelle nt | Poor |

As shown in Tables 1 to 4, it was confirmed that, in the case of the poly(arylene ether) resin compositions (Examples 1 to 15) of the present invention, the mechanical properties such as tensile strength, flexural strength, and impact strength, heat deflection temperature, heat resistance and flame retardancy were excellent compared to the compositions of Comparative Examples 1 to 14. In addition, the flame endurance times of the batteries were 500 seconds or more, which indicates that the flame retardation properties during thermal runaway of the batteries are excellent.

Specifically, in the case of Comparative Example 1 including 3.13 parts by weight of one type of phosphorus-based flame retardant, flame retardancy and a flame endurance time were decreased, and in the case of Comparative Example 2 including 7.5 parts by weight of one type of phosphorus-based flame retardant, all mechanical properties were decreased.

In addition, Comparative Examples 3 and 4 excluding the mica powder (d) and Comparative Examples 5 including the two types of phosphorus-based flame retardants in a content less than the range of the present invention exhibited poor flame retardancy and flame endurance time.

In addition, in the case of Comparative Example 6 in which the composition ratio of the base resin was outside the range of the present invention, a heat deflection temperature and a flame endurance time deteriorated, and in the case of Comparative Example 7 in which the two types of flame retardants were contained in an excessive content, the flame endurance time was very short, and the heat deflection temperature was low.

In addition, in the case of Comparative Example 8 in which the mica powder (d) was included in a content less than the range of the present invention, the flame endurance time was very short, and the flame retardancy was decreased. On the other hand, in the case of Comparative Example 9 in which the content of the mica powder (d) exceeded the range of the present invention, the impact strength was decreased.

In addition, also in the case of Comparative Examples 10 and 11 in which the content of the barium sulfate (e-1) was outside the range of the present invention, the flame endurance time was shortened, so that thermal runaway could not be prevented when applied to a battery part of an electric vehicle.

In addition, in the case of Comparative Examples 12 including the barium sulfate (e-2) in which the average particle diameter of the barium sulfate (e-2) was outside the range of the present invention, the flame endurance time was shortened.

Further, in the case of Comparative Example 13 in which the glass fiber (C) was included in a content less than the range of the present invention, all of mechanical properties, heat deflection temperature, flame retardancy and a flame endurance time were decreased, and in the case of Comparative Examples 14 in which the glass fiber (C) was included in a content greater than the range of the present invention, mechanical properties, heat deflection temperature, flame retardancy and a flame endurance time were excellent, but fluidity was decreased, so that the molding processability and the appearance of the molded article were poor.

In conclusion, it was confirmed that the poly(arylene ether) resin composition according to the present invention including a base resin containing a poly(arylene ether) resin and a polystyrene resin in predetermined contents; two or more types of organophosphorus flame retardants having different phosphorus contents; glass fiber; mica powder; and a sulfate of an alkaline earth metal having a predetermined average particle diameter in predetermined contents exhibited excellent mechanical properties such as excellent impact strength, tensile strength and flexural strength, heat resistance and flame retardancy and excellent flame retardation properties during thermal runaway, thus satisfying properties required in electronic components such as an electric-vehicle battery.

## Claims

1. A poly(arylene ether) resin composition, comprising:
100 parts by weight of a base resin comprising 75 to 95 % by weight of a poly(arylene ether) resin (a-1) and 5 to 25 % by weight of a polystyrene resin (a-2);
12 to 17 parts by weight of two or more types of organophosphorus flame retardants (b) having different phosphorus contents;
10 to 40 parts by weight of glass fiber (c);
0.5 to 5 parts by weight of mica powder (d); and
1 to 4 parts by weight of a sulfate (e) of an alkaline earth metal with an average particle diameter of 0.05 to 3 µm.

2. The poly(arylene ether) resin composition according to claim 1, wherein the poly(arylene ether) resin (a-1) has an intrinsic viscosity of 0.2 to 0.8 dl/g.

3. The poly(arylene ether) resin composition according to claim 1, wherein the polystyrene resin (a-2) is general-purpose polystyrene, high-impact polystyrene, or a mixture thereof.

4. The poly(arylene ether) resin composition according to claim 1, wherein the two or more types of organophosphorus flame retardants (b) having different phosphorus contents comprises an organophosphorus flame retardant (b-1) containing 5 to 15 % by weight of phosphorus, and an organophosphorus flame retardant (b-2) containing 20 to 35 % by weight of phosphorus.

5. The poly(arylene ether) resin composition according to claim 4, wherein a weight ratio (b-1:b-2) of the organophosphorus flame retardant (b-1) to the organophosphorus flame retardant (b-2) is 6:4 to 8.5:1.5.

6. The poly(arylene ether) resin composition according to claim 4, wherein the organophosphorus flame retardant (b-1) containing 5 to 15 % by weight of phosphorus is one or more selected from the group consisting of bisphenol-A-bis(diphenyl phosphate) (BPADP), tri-phenyl phosphate (TPP), and resorcinol bis diphenyl phosphate (RDP).

7. The poly(arylene ether) resin composition according to claim 4, wherein the organophosphorus flame retardant (b-2) containing 20 to 35 % by weight of phosphorus is one or more selected from the group consisting of a dialkylphosphinic acid salt represented by Formula 3 below, a diphosphinic acid salt represented by Formula 4, and a polymer of one or more thereof: 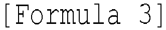 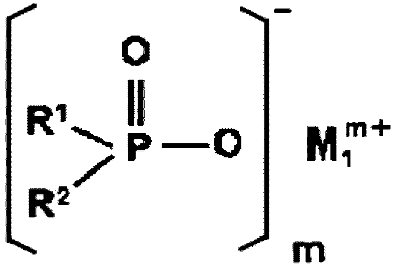 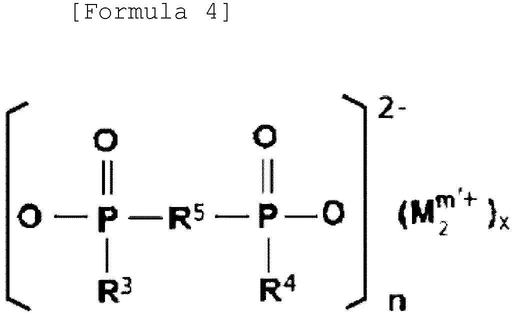 in Formulas 3 and 4, R¹, R², R³ and R⁴ are each independently linear or branched C₁-C₁₀ alkyl, C₁-C₁₀ cycloalkyl, or H; R⁵ is linear or branched C₁-C₁₀ alkylene, C₆-C₁₀ arylene, C₇-C₂₀ alkylarylene, or C₇-C₂₀ arylalkylene; M₁^{m+} and M₂^{m'+} are each independently a nitrogen base compound in which one or more atoms selected from the group consisting of Mg, Ca, Al, Sb, Sn, Ge, Ti, Zn, Fe, Zr, Ce, Bi, Sr, Mn, Li, Na, and K are cationized, protonated, or cationized and protonated; m is an integer from 1 to 4; n is an integer from 1 to 4; and x is an integer from 1 to 4.

8. The poly(arylene ether) resin composition according to claim 1, wherein the glass fiber (c) has an average particle diameter of 3 to 25 µm and an average length of 1 to 15 mm.

9. The poly(arylene ether) resin composition according to claim 1, wherein the mica powder (d) has an average particle diameter of 50 to 150 µm.

10. The poly(arylene ether) resin composition according to claim 1, wherein, after applying a flame having a size (125 mm (500 W)) specified in ASTM D5207 in accordance with UL 94 5V test to an injection-molded specimen with a size of 100 mm * 100 mm * 1 mm made of the poly(arylene ether) resin composition, a flame endurance time taken until a hole or a drip is generated in the specimen is 500 seconds or more.

11. The poly(arylene ether) resin composition according to claim 1, wherein a notched Izod impact strength, measured according to ISO 180A, of a notched specimen made of the poly(arylene ether) resin composition and having a thickness of 4 mm is 7.7 kJ/m² or more.

12. The poly(arylene ether) resin composition according to claim 1, wherein a heat deflection temperature, measured under a stress of 1.8 MPa in accordance with ISO 75-2, of a specimen made of the poly(arylene ether) resin composition and having a thickness of 4 mm is 120 °C or more.

13. A method of preparing a poly(arylene ether) resin composition, the method comprising:
kneading and extruding 100 parts by weight of a base resin comprising 75 to 95 % by weight of a poly(arylene ether) resin (a-1) and 5 to 25 % by weight of a polystyrene resin (a-2), 12 to 17 parts by weight of two or more types of organophosphorus flame retardants (b) having different phosphorus contents, 10 to 40 parts by weight of glass fiber (c), 0.5 to 5 parts by weight of mica powder (d) and 1 to 4 parts by weight of a sulfate (e) of an alkaline earth metal with an average particle diameter of 0.05 to 3 µm,
wherein the kneading and extruding is performed using an extruder equipped with 9 or more kneading blocks.

14. A molded article, comprising the poly(arylene ether) resin composition according to any one of claims 1 to 12.
